# EUROPEAN PATENT SPECIFICATION

(11) **EP 3 483 690 B1**
(45) Date of publication and mention of the grant of the patent: **28.10.2020**
(21) Application number: 18204932.0
(22) Date of filing: 07.11.2018
(51) Int. Cl.: G05D 7/06, G01F 1/00, G01F 25/00, G01F 15/00

(54) **A METHOD FOR CONTROLLING A FLUID FLOW THROUGH A VALVE**
VERFAHREN ZUR STEUERUNG EINES FLUIDSTROMS DURCH EIN VENTIL
PROCÉDÉ DE RÉGULATION D'UN ÉCOULEMENT DE FLUIDE À TRAVERS UNE SOUPAPE

(30) Priority: 10.11.2017 DK PA201700634
(43) Date of publication of application: 15.05.2019
(73) Proprietor: Danfoss A/S, 6430 Nordborg (DK)
(72) Inventor: Nose, Peter, 6430 Nordborg (DK)
(74) Representative: Inspicos P/S

(56) References cited:
- US-A1- 2003 233 203
- US-A1- 2015 057 816
- US-A1- 2015 168 956

## Description

### FIELD OF THE INVENTION

The present invention relates to a method for controlling a fluid flow through a valve arranged in a fluid flow system.

### BACKGROUND OF THE INVENTION

To improve energy efficiency of a fluid flow system, flow of the fluid needs to be measured and regulated. By measuring, controlling and regulating the flow in, e.g., a heating or cooling system, the amount of energy exchanged through the system to heat or cool a building is also measured and regulated. The flow of the fluid is regulated by a number of valves, i.e., by varying an opening degree of the valves. The valves are typically controlled by a system controller which determines a desired flow through the system. The system controller can be or form part of a building management system, a room controller, or the like. In the case that the fluid flow system comprises at least one flow sensor, the system controller may receive a current fluid flow value from the flow sensor which measures the fluid flow and, based on the measured value and a desired fluid flow, controls the valves in the system. Flow sensors come with different flow ranges which can accurately be measured. Those capable of measuring low flow rates with high accuracy are rather expensive and can significantly increase a cost of the fluid flow system. On the other hand, the controller requires an accurate value of fluid flow in order to control the valves properly.

US 2016/0054741 A1 discloses a method for controlling opening of a valve in a HVAC system to regulate flow of a fluid through a thermal energy exchanger of the HVAC system and to thereby adjust the amount of energy exchanged by the thermal energy exchanger.

US 2015/0168956 A1 discloses a mass flow controller (MFC) including a proportional valve and a mass flow sensor. A first flow line connects from an outlet of the proportional valve through the mass flow sensor to an exit line. A second flow line joins the first flow line at a first junction located upstream of the mass flow sensor and at a second junction located downstream of the mass flow sensor, thereby bypassing the mass flow sensor. A switching valve is placed such that the switching valve can regulate a flow of gas through the first flow line or the second flow line. The mass flow sensor is initially calibrated by determining a sensor signal at zero-flow conditions. Sensor signals for several pre-defined non-zero flow rates are measured, and the zero-offset value is subtracted from the values of these signals to construct a calibration curve which provides a relationship between sensor readings and actual mass flow. The zero-offset is updated by switching the switching valve such that a gas flows through the second flow line and bypasses the mass flow sensor. A zero-flow signal is measured using the mass flow sensor while the gas flows through the second flow line, and the zero-offset of the mass flow controller is updated based on the measured zero-flow signal.

US 2015/0057816 A1 discloses a method for operating a flow-control valve that includes comparing a desired flow with an actual flow through the valve and re-calibrating a valve iso-curve at periodic intervals when the actual flow falls outside of a predetermined threshold relative to the desired flow.

US 2003/0233203 A1 discloses a method and an apparatus for determining fluid flow through a pressure regulator. The pressure regulator is disposed in a fluid flow passage and has a throttling element movable in the flow passage. A processor is provided which includes a stored algorithm for determining flow rate based on a measured pressure and travel values for the throttling element, and for calibrating the pressure regulator using a temporary flow meter disposed downstream of the throttling element.

### DESCRIPTION OF THE INVENTION

It is an object of embodiments of the invention to provide a method for controlling a fluid flow through a valve arranged in a fluid flow system in an accurate manner, without increasing the manufacturing costs of the fluid flow system.

According to a first aspect, the invention provides a method for controlling a fluid flow through a valve arranged in a fluid flow system, according to claim 1.

Thus, the first aspect of the invention provides a method for controlling a fluid flow through a valve in response to measurements of the flow rate obtained by the flow sensor. For flow rates which are lower than the predetermined threshold, the method performs calibration and hence correction of the measured values, ensuring accurate system operation.

The fluid flow system may be a heating, cooling, or process system, such as one comprising a plurality of radiators, floor heating systems, hot water tapping station, or the like. In such systems, pressures and flow rates may fluctuate, reducing energy efficiency of the system. The valve installed in the system may be a valve of any type such as a pressure controlled valve, a flow controlled valve, a pressure independent controlling valve, or the like. It can be installed at any relevant point in the flow system, to ensure desired system operation. A number of valves may be installed in the system, and controlled by the method described herein.

The valve seat is to be understood as a traditional valve seat, e.g. having a circular shape and representing a fixed part of the valve positioned inside the valve and between the inlet and outlet.

The valve element is mounted in such a manner that it is movable relative to the valve seat, i.e., it can be moved towards and away from the valve seat, changing a flow rate through the valve. Alternatively, the valve seat may be movable with respect to the valve element, causing the same effect. A portion of the valve element closer to the valve seat may have a shape which corresponds to the shape of the valve seat such that it can enter or abut the valve seat.

The relative position of the valve element with respect to the valve seat defines the opening degree of the valve. The opening degree determines the fluid flow through the valve. By moving the valve element towards the valve seat, the opening degree decreases reducing the fluid flow through the valve. When the valve element enters or abuts the valve element, the valve is closed and the flow of fluid through the valve is prevented. Similarly, by moving the valve element away from the valve seat, the opening degree increases increasing the fluid flow through the valve.

The flow sensor is arranged in the fluid flow system and serves to measure the instant flow rate in the part of the fluid flow system where the flow sensor is positioned. For instance, the flow sensor may be arranged at a fluid inlet or a fluid outlet of the valve. In this case, the flow sensor provides a direct measure for the fluid flow through the valve. As an alternative, the flow sensor may be positioned in another part of the fluid flow system. In this case, the flow sensor provides an indirect measure for the fluid flow through the valve. The flow sensor may measure linear, nonlinear, mass or volumetric flow rate of a liquid, a gas or a mixture of liquid and gas, flowing in the system. The flow sensor may have its own dynamic range within which it can accurately measure the flow rate. Depending on the system in which the flow sensor is used, it can be of a different type and design such as turbine flow sensor, electromagnetic flow sensor, thermal mass flow sensor or the like.

In the method according to the first aspect of the invention, a flow rate, Q_{M}, is measured by means of the flow sensor. Q_{M} represents the flow rate of the fluid through the part of the flow system where the flow sensor is positioned, at the time of measurement. Depending on a position of the flow sensor within the system, Q_{M} can represent the flow rate through the valve or the flow rate at any other point of the system at any point of time and for any opening degree of the valve. The measured flow rate value, Q_{M}, depends on a corresponding opening degree ϕ_{M}, and on the prevailing operating conditions, such as pressure and temperature prevailing in the part of the fluid flow system where the flow sensor is positioned. Usually, when the opening degree of the valve is changed, the flow rate is changed as well.

As mentioned above, flow sensors come with different ranges of flow measurements within which the flow rate is measured with a good precision. Some flow rate sensors have a predetermined flow rate lower threshold value, Q_{T}, below which the flow rate measurements may not be accurate and trustworthy. This is particularly the case for low cost flow sensors. If the measured flow rate, for such flow sensors, is lower than the threshold value, there is a need for correction of the measured value to obtain a precise value which matches a "true" flow rate, and thereby can be used as an input for a controller used for controlling the valve.

Thus, the measured flow rate, Q_{M}, is compared with a threshold value, Q_{T}, representing a lower threshold value of the kind described above. The comparison may be performed within the flow sensor which may comprise simple electronics which compare the two values Q_{M} and Q_{T}. Alternatively, the comparison may be performed by means of a controller, e.g. a dedicated controller or the controller which is used for controlling the valve and/or the fluid flow system. If the comparison reveals that Q_{M}>Q_{T}, then the measured value may be sent to a controller which may be the one setting a desired or optimal flow rate needed for the system to function optimally and efficiently. This will be described in further detail below. If Q_{M}<Q_{T}, this is an indication that the flow sensor is operating in an unreliable measurement region. Therefore the flow sensor enters a calibration mode during which the measured flow rate is corrected to match the true flow rate.

The first step in the calibration is changing the opening degree of the valve. The opening degree of the valve may be changed in steps and the flow rate can be measured by the flow sensor for each opening degree. The changing of the opening degree of the valve may be performed by way of at least one actuator. The actuator may be a part of the valve and may be in connection with the controller which has information about the optimal flow rate. The actuator may alternatively comprise the controller.

The next calibration step is establishing a relationship between actual flow rate and opening degree of the valve. In the present context the term 'actual flow rate' should be interpreted to mean the real, physical flow rate of fluid flowing in the part of the fluid flow system where the flow sensor is positioned. In the case that the flow rate is at a level where the flow sensor operates in a reliable manner, it can be assumed that the actual flow rate is substantially equal to the flow rate measurements obtained by the flow sensor. However, when the flow rate is below the threshold value, and thereby in a region where the flow sensor is unreliable, the actual flow rate differs from the measured values obtained by the flow sensor.

The relationship between the actual flow rate and opening degree of the valve is established based on the measurements of the flow rate during the change of the opening degree, and thereby based on measurements which can be expected to be performed within the range above the predetermined threshold, i.e. in a reliable region of the flow sensor. Accordingly, a reliable relationship between the opening degree of the valve and the actual flow rate, under the given operating conditions, can be obtained in this manner.

The last calibration step is determining a correction, C, based on the established relationship between the actual, i.e. true, flow rate and opening degree of the valve for the values above the threshold. The correction, C, reflects a difference between the actual flow rate and the flow rate values measured by the flow sensor, under the given operating conditions.

Accordingly, the correction, C, represents a value by which the measured flow rate values need to be corrected in order to obtain values for the actual flow rate, which can be used as input for the control loop for the valve.

Finally, after completion of the calibration, the opening degree of the valve is controlled so that the desired flow rate can be obtained. This control is performed on the basis of flow rate measurements which are performed by means of the flow sensor in the range below the predetermined threshold value and which are corrected by the correction, C. The control is performed by the controller which is supplied by accurate flow rate values, i.e., obtained flow rates corrected by the correction.

Thus, according to the first aspect of the invention, the fluid flow through the valve is controlled on the basis of measured flow rate in the fluid flow system. As long as the measured flow rate is above the threshold value, Q_{T}, and the measurements performed by the flow sensor are therefore assumed to be reliable, the measured flow rate values are simply used as input to the control loop. However, when the measured flow rate is below the threshold value, Q_{T}, and the measurements performed by the flow sensor are therefore assumed to be unreliable, the measured flow rate values are corrected by the correction, C, in the manner described above, before being supplied to the control loop of the valve. Thereby it is ensured that the flow rate input to the control loop of the valve corresponds to the actual flow rate at the position of the flow sensor throughout the relevant flow rate range, regardless of whether or not the unreliable range of the flow sensor is entered. Thus, accurate control of the valve can be obtained throughout the entire flow rate range, without requiring an expensive type of flow rate sensor, which is capable of providing reliable flow rate measurements throughout the entire flow rate range.

The method may further comprise the steps of repeating the calibration step when a predefined time interval, Δt, has elapsed since initiation of a previous calibration step, and repeating the calibration step until Q_{M}≥Q_{T}. After determination of the correction, the flow rate may continuously be measured by the flow sensor, and after the predefined time interval, Δt, may again be compared with the predetermined threshold value. The predefined time interval may be different for different fluid flow systems. It may be set manually, or may be set by the flow sensor. It may take values such as 5 minutes, 10 minutes, 15 minutes, or the like. By repeating the calibration step at regular small time intervals, it is ensured that the calibration of the flow sensor remains accurate, even if the operating conditions, such as pressure and/or temperature conditions, change, or if the flow sensor or the valve drifts.

The step of changing the opening degree of the valve may be performed by increasing the opening degree of the valve until the flow rate, Q_{M}, measured by the flow sensor, is at least equal to Q_{T}. By increasing the opening degree of the valve the flow rate is automatically increased. When the flow rate reaches at least the threshold value, accurate measurement is performed and accurate relationship between the flow rate and opening degree may be established and used for correcting the flow rate measured below the threshold.

The step of changing the opening degree may be performed by increasing the opening degree of the valve a plurality of times, wherein ϕᵢ₊₁ is larger than ϕᵢ, and wherein ϕ₁ corresponds to the flow rate being at least equal to Q_{T}. By having a plurality of flow rate - opening degree sets obtained in the zone above the threshold, correction, C, is determined with a higher accuracy, and therefore the corrected flow rate will be closer to the "true" value.

The method may further comprise the step of setting the opening degree of the valve back to an operational opening degree, ϕ_{A}, the step being performed after the calibration step. The operational opening degree is to be understood as the opening degree of the valve which the valve had before the calibration step started. Namely, the fluid flow system is brought back to its original stage set by the controller outside of the calibration mode. This will normally be an opening degree which results in a flow rate below the threshold value, Q_{T}, and thereby a flow rate within the unreliable range of the flow sensor.

The step of establishing a relationship between the actual flow rate and opening degree of the valve may be based on a valve characteristic function, F=f(ϕ, Q), for the valve. This function may be determined upon manufacturing of the valve to describe behaviour of the valve within the system. It may be provided by the manufacturer and/or it may be determined empirically.

The valve characteristic function, F, may define a linear relation between the flow rate, Q, and opening degree, ϕ, of the valve. In this case, the calibration of the flow rate measured below the threshold value may be obtained by interpolation from values measured within the reliable range of the flow sensor. The valve characteristic function may be used for determining the correction.

The correction, C, may be a function of Q_{M}. The function may be either a linear function or a nonlinear function. If the correction is a linear function, the flow rate measured in the range below the threshold value, will be simply scaled up or down to obtain a more accurate value. In the case of a correction being a nonlinear function, connection between the measured and accurate flow rate will be more complex. In order to determine the nonlinear correction function, the valve characteristic may at first need to be determined under different operating conditions.

The correction, C, may be obtained from a look-up table, and in combination with the measured flow rate and the corresponding opening degree of the valve in the region above the threshold value. The look-up table may be established either at the installation of the valve, or may represent manufacturing settings. It may also be that the look-up table is established using a more precise flow sensor, which is rather more expensive and which would be used only for system characterizations, and not for standard use. Knowing the valve characteristics, look-up table, and one or more measurements in the range above the threshold, the correction may be obtained.

In one embodiment, the method may further comprise the step of controlling the opening degree of the valve on the basis of flow rate measurements performed by means of the flow sensor in the case that the comparing step reveals that Q_{M}≥Q_{T}. According to this embodiment, in the case that the comparison reveals that the flow rate measured by the flow sensor is above the threshold value, and the measurements performed by the flow sensor can therefore be assumed to be reliable, the calibration process is not performed, and the flow rate measurements performed by the flow sensor are simply used directly as input to the control loop of the valve.

According to a second aspect the invention provides a fluid flow system comprising a valve, a flow sensor, and a controller, the controller being configured to perform the method according to the first aspect of the invention. The flow sensor may communicate with the controller which controls the valve in response to at least the flow rate. The controller may be in communication with an external device such as a room controller, providing input to the controller on, e.g., temperature in a room to which the room controller is related. Since the controller of the fluid flow system according to the second aspect of the invention is configured to perform the method according to the first aspect of the invention, the remarks set forth above with reference to the first aspect of the invention are equally applicable here.

The flow sensor may be an integral part of the valve. It may be positioned at a valve inlet or a valve outlet, or at any other suitable position within the valve, in order to directly measure the flow rate through the valve. As an alternative, the flow sensor may be positioned at any other relevant point in the flow system, measuring the flow rate through the system pipeline at that position, and thereby providing an indirect measure for the flow rate through the valve.

The flow sensor may be an exchangeable device. Sometimes requirements on the system can be changed, and this may require different flow sensors with different dynamic ranges, or different precision. Further, if the flow sensor experiences some failures, exchanging the flow sensor is the simplest option, and may not cause any interruption in the fluid flow.

### BRIEF DESCRIPTION OF THE DRAWINGS

The invention will now be described in further detail with reference to the accompanying drawings in which
Fig. 1 is a cross sectional view of a valve being controlled in accordance with a method according to an embodiment of the invention,
Fig. 2 is a diagrammatic view of a part of a fluid flow system according to an embodiment of the invention,
Fig. 3a is a graph illustrating flow rate in a fluid flow system according to an embodiment of the invention as a function of time,
Fig. 3b is an enlarged view of a part of the graph of Fig. 3a,
Figs. 4a-4c are diagrammatic views of fluid flow systems according to three embodiments of the invention, and
Fig. 5 is a flow chart illustrating a method according to an embodiment of the invention.

### DETAILED DESCRIPTION OF THE DRAWINGS

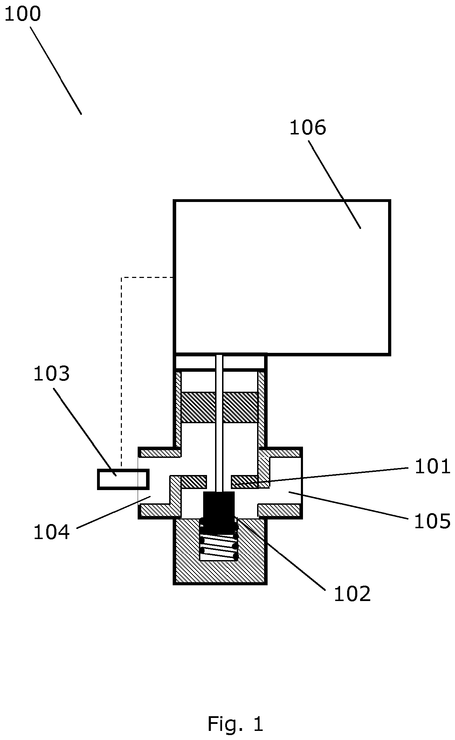

Fig. 1 is a cross sectional view of a valve 100 comprising a valve seat 101 and a valve element 102. The valve element 102 is movable with respect to the valve seat 101, and an opening degree of the valve 100 is determined by a relative position between the valve seat 101 and the valve element 102. Fluid flowing through the valve 100 enters the valve 100 via fluid inlet 104, passes through a passage defined between the valve seat 101 and the valve element 102, and exits the valve 100 via fluid outlet 105. The position of the valve element 102 relative to the valve seat 101 determines the size of the passage, thereby determining the opening degree of the valve 100.

The valve 100 further comprises a flow sensor 103 arranged at the fluid inlet 104. However, it should be understood that the flow sensor 103 could alternatively be arranged at the fluid outlet 105, or at another suitable position along the flow path through the valve 100. Thus, the flow sensor 103 is capable of directly measuring the flow rate of fluid through the valve 100.

The valve 100 further comprises an actuator 106 being in communication with the flow sensor 103 and which controls the opening degree of the valve 100 in response to flow rate measurements performed by the flow sensor 103, by controlling movements of the valve element 102 relative to the valve seat 101. This is obtained in accordance with a method according to an embodiment of the invention, and essentially as described above. Thus, the flow rate measured by the flow sensor 103 is compared to a threshold value, below which the measurements performed by the flow sensor 103 are expected to be unreliable. If the measured flow rate is above the threshold value, the measured flow rate value is simply supplied to the actuator 106, and the fluid flow through the valve 100 is controlled based thereon, e.g. using a feedback control loop, based on a set point value providing a desired fluid flow through the valve 100.

However, if the measured flow rate is below the threshold value, the measurements performed by the flow sensor 103 are considered unreliable, and a calibration process is initiated in which the opening degree of the valve 100 is changed, preferably increased sufficiently to bring the flow rate at the position of the flow sensor 103 into the reliable range of the flow sensor 103. During this, a relationship between actual flow rate at the position of the flow sensor 103 and opening degree of the valve 100 is established, based on measurements performed by the flow sensor 103 within its reliable range. Since the relationship is obtained based on actual measurements, it reflects the prevailing operating conditions, including prevailing pressure and/or temperature conditions. A correction, C, is then determined, based on the relationship, the correction, C, corresponding to a difference between flow rate measurements performed by the flow sensor 103 in the unreliable range and the real, actual flow rate. Once the correction, C, has been obtained, the actuator 106 controls the valve 100 on the basis of measurements performed by the flow sensor 103, corrected by the correction, C.

Thereby accurate control of the valve 100 is obtained within the entire flow rate range, without requiring a costly flow sensor being capable of providing accurate measurements, also at low flow rates.

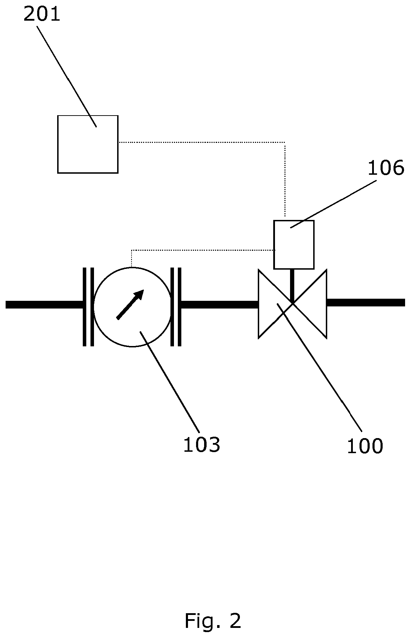

Fig. 2 is a diagrammatic view of a part of a fluid flow system according to an embodiment of the invention, comprising a valve 100, a flow sensor 103, an actuator 106 and a system controller 201. In this embodiment, the flow sensor 103 measures the flow rate immediately before or after the fluid enters/exits the valve 100. The actuator 106 controls the opening degree of the valve 100 in response to flow rate measurements performed by the flow sensor 103. If the flow sensor 103 measures a flow rate below its threshold, it will enter a calibration mode, as described above with reference to Fig. 1, and will instruct the actuator 106 to increase the opening degree of the valve 100 in order to measure flow rates above the threshold value and use them to determine a correction for the flow rate values measured below the threshold value. The actuator 106 is also in communication with a system controller 201, which controls the valve 100 via the actuator 106, and based on the desired flow rate which is needed for the system to function optimally.

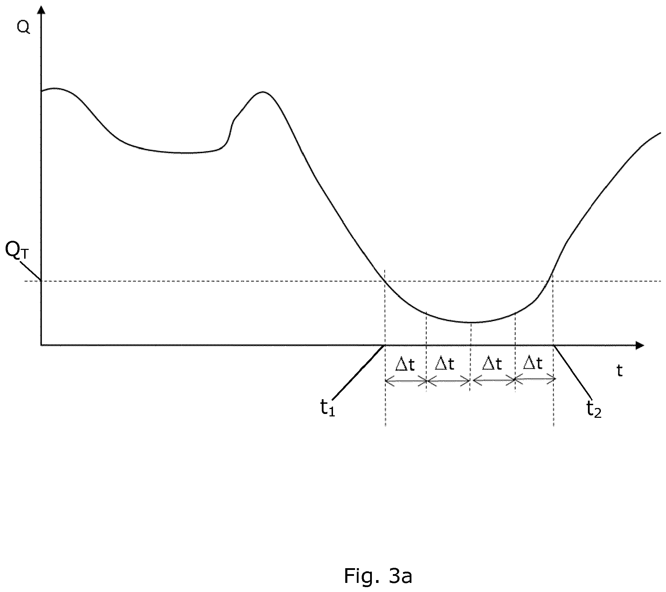

Fig. 3a is a graph illustrating flow rate in a fluid flow system according to an embodiment of the invention as a function of time. The graph of Fig. 3a could, e.g., be obtained by means of the flow sensor 103 shown in Fig. 1 or Fig. 2. Flow rate, Q, is measured by the flow sensor. It varies as a function of time, t, and drops below a threshold value, Q_{T}, of the flow sensor at t₁ point in time. As described above, the flow sensor is expected to operate unreliably at flow rates below the threshold value, Q_{T}.

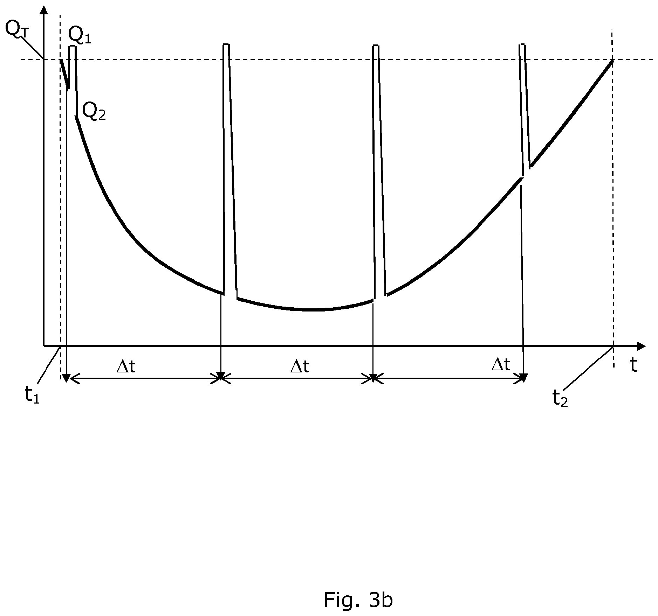

Thus, when the flow sensor detects a flow rate lower than the threshold value, Q_{T}, it enters a calibration mode, as described above. This will also be described in further detail below with reference to Fig. 3b. The flow rate remains below the threshold value, Q_{T}, until t₂ point in time. Accordingly, from t=t₁ until t=t₂, the valve is controlled on the basis of the measured flow rate, corrected by the correction which is obtained during the calibration process.

Fig. 3b is an enlarged view of a part of the graph of Fig. 3a between t=t₁ and t=t₂. The first step in the calibration is increasing the opening degree of the valve 100 such that the flow rate reaches a value which is at least equal to the threshold value, Q_{T}. In Fig. 3b the first peak Q₁ shows the flow rate which is slightly larger than the threshold value. During this, a relationship between the opening degree of the valve and the actual flow rate, being the flow rate which is measured by the flow sensor above the threshold value, Q_{T}, is established. The relationship established in this manner also takes the prevailing operating conditions, such as prevailing pressure and temperature conditions, into account. Thereby the established relationship provides information regarding what the actual flow rate can be expected to be at a specific opening degree, and under the prevailing operating conditions.

Based on the established relationship between Q₁ and its corresponding opening degree, a correction, C, is determined, and the opening degree of the valve 100 is set back to the position before the calibration mode started and therefore the flow rate drops back to Q₂. The changing of the opening degree of the valve 100 is performed by way of the actuator 106. Subsequently, the valve is controlled on the basis of flow rate measurements performed by the flow sensor, but corrected by the correction, C.

Each time a time interval, Δt, has elapsed, the calibration process described above is repeated, until the measured flow rate increases above the threshold value, Q_{T}, at time t₂, and the measurements performed by the flow sensor can again be considered to be reliable.

By repeating the calibration process at regular intervals, it is ensured that the calibration, and thereby the correction, C, applied to the measured flow rate values, keeps reflecting the prevailing operating conditions, even if the prevailing operating conditions change.

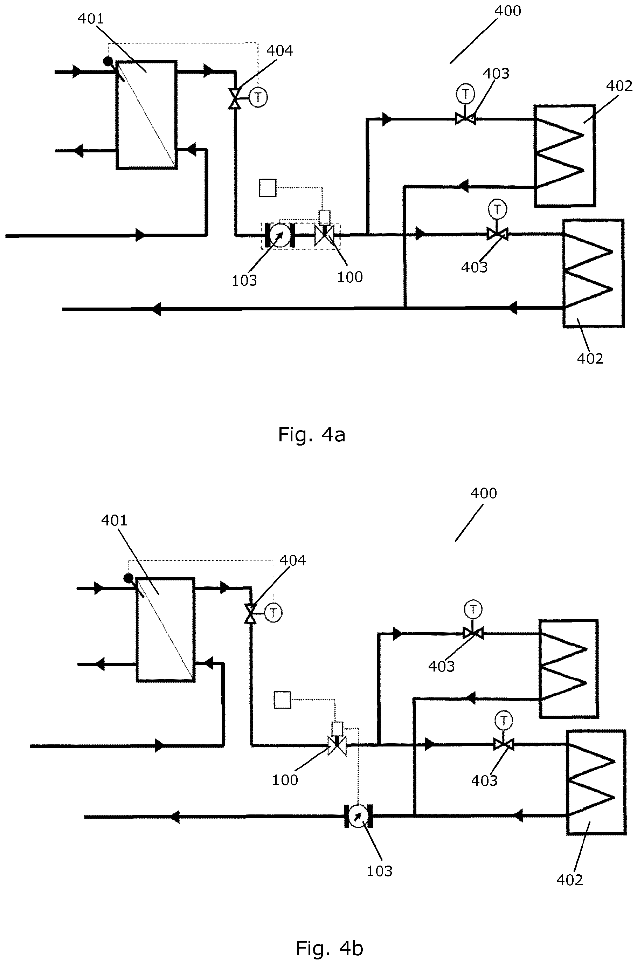

Figs. 4a-4c are diagrammatic views of fluid flow systems 400 according to three embodiments of the invention. Each of the fluid flow systems 400 comprises a main heat exchanger 401, arranged to perform heat exchange between an external heat source, such as a district heating system, and fluid flowing in the fluid flow system 400. Each fluid flow system 400 further comprises a number of secondary heat exchangers 402, two of which are shown. The secondary heat exchangers 402 could, e.g., be in the form of radiators, floor heating systems, or the like. It could also be envisaged that one or more of the secondary heat exchangers 402 is associated with a hot water tap.

The fluid flow supplied to each of the secondary heat exchangers 402 is controlled by means of a valve 403, which may advantageously be temperature controlled. Furthermore, the fluid flow from the primary heat exchanger 401 towards the secondary heat exchangers 402 is controlled by means of a valve 404 being controlled on the basis of measurements of the temperature of the cold side of the primary heat exchanger 401.

The fluid flow system 400 further comprises a valve 100 being controlled in accordance with a method according to an embodiment of the invention. The valve 100 could, e.g., be of the kind illustrated in Fig. 1. The fluid flow system 400 further comprises a flow sensor 103.

In the fluid flow system 400 of Fig. 4a, the valve 100 is arranged in a part of the fluid flow system 400 which interconnects the primary heat exchanger 401 to both of the secondary heat exchangers 402. Thus, in this case, the valve 100 controls fluid flow towards both of the secondary heat exchangers 402. Furthermore, the flow sensor 103 is arranged in immediate connection with a fluid inlet of the valve 100, and may even form part of the valve 100. Thus, the flow sensor 103 provides a direct measure for the flow rate of fluid through the valve 100.

In the fluid flow system 400 of Fig. 4b, the valve 100 is also arranged in a part of the fluid flow system which interconnects the primary heat exchanger 401 to both of the secondary heat exchangers 402. However, in this case the flow sensor 103 is arranged in a return pipe, i.e. in a part of the fluid flow system which returns fluid which has passed through one of the secondary heat exchangers 402. Accordingly, the flow sensor 103 is arranged remotely from the valve 100, and it thereby provides an indirect measure for the flow rate through the valve 100.

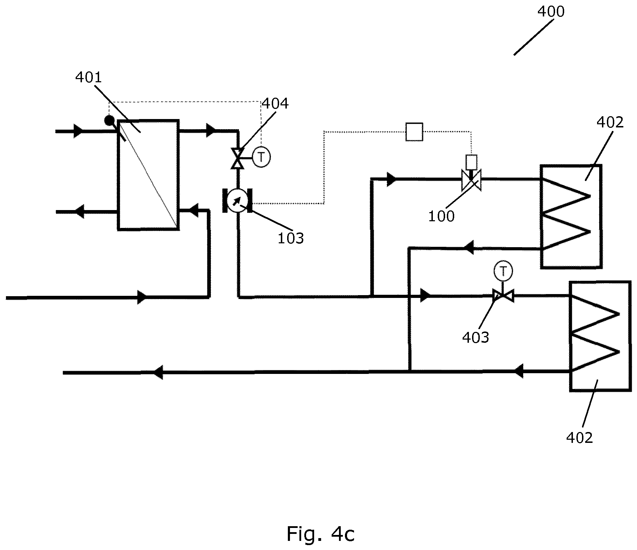

In the fluid flow system 400 of Fig. 4c, the valve 100 replaces the temperature controlled valve controlling the fluid flow towards one of the secondary heat exchangers 402. The flow sensor 103 is arranged immediately downstream relative to the valve 404 which controls the fluid flow from the primary heat exchanger 401 towards the rest of the fluid flow system 400. Thus, in this case the flow sensor 103 also provides an indirect measure for the flow rate through the valve 100.

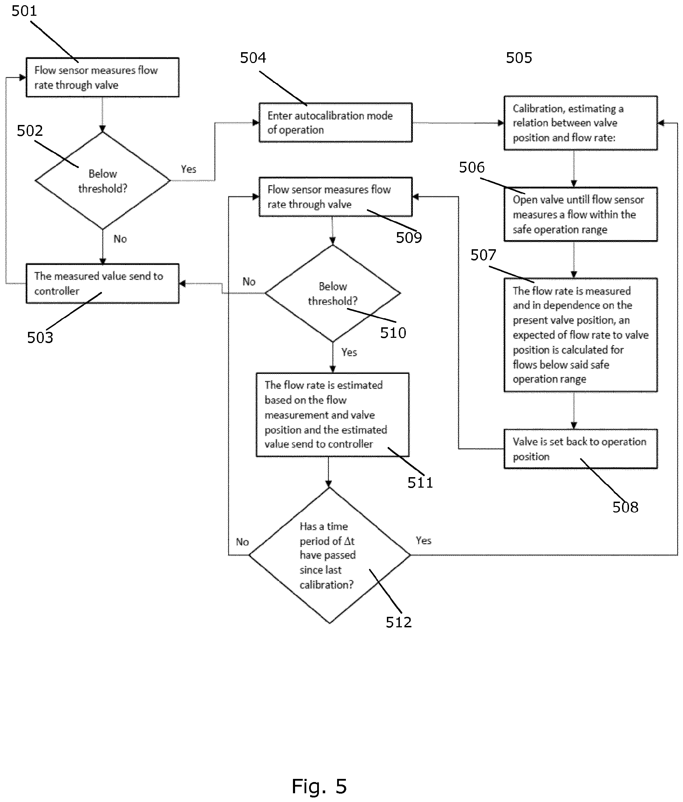

Fig. 5 is a flow chart illustrating a method for controlling a fluid flow through a valve according to an embodiment of the invention. The process is started at step 501, where a flow rate through the valve is measured by means of a flow sensor. At step 502 the measured flow rate is compared to a threshold value. In the case that the measured flow rate is above the threshold value, the flow rate is considered to be within a range where measurements performed by the flow sensor can be assumed to be reliable. Accordingly, the process is, in this case, forwarded to step 503, where flow rate values measured by the flow sensor are sent directly to the valve controller, and the fluid flow through the valve is controlled on the basis of the measured flow rate values. The process is further returned to step 501 for continued monitoring of the measured flow rate.

In the case that step 502 reveals that the measured flow rate is below the threshold value, the flow rate is considered to be within a range where measurements performed by the flow sensor can be assumed to be unreliable. Accordingly, the process is, in this case, forwarded to step 504, where an autocalibration mode of operation is entered.

At step 505 calibration of the flow sensor is initiated in order to establish a relationship between valve position, i.e. opening degree of the valve, and actual flow rate through the valve. This includes, at step 506, opening the valve, i.e. increasing the opening degree, until the flow rate measured by the flow sensor is above the threshold value, and thereby within the range in which measurements performed by the flow sensor are reliable. During this, at step 507, the flow rate is measured by means of the flow sensor. Based on the measured flow rate and the corresponding opening degree of the valve, an expected actual flow rate for a given opening degree, under the prevailing operating conditions, is estimated. This relationship is extrapolated in such a manner that a relationship between opening degree and actual flow rate, in the range below the threshold valve, can be estimated. Based thereon a correction is obtained.

At step 508 the valve is set back to operating position, i.e. it is returned to the setting which is dictated by the controller, and thereby the flow rate through the valve is once again within the unreliable range below the threshold value.

At step 509 the flow sensor once again measures the flow rate through the valve, and at step 510 the measured flow rate is compared to the threshold value. In the case that the measured flow rate is above the threshold value, the measurements of the flow sensor are considered as being within the reliable range, and the process is forwarded to step 503.

In the case that step 510 reveals that the flow rate measured by the flow sensor is still below the threshold value, the process is forwarded to step 511. At step 511 the flow rate values measured by the flow sensor are corrected by the correction which was obtained in step 507, and the corrected flow rate values are sent to the valve controller, and the valve is controlled on the basis of the corrected flow rate values. Accordingly, the measured flow rate values are adjusted in order to provide a more accurate value for the actual flow rate before the flow rate values are provided to the valve controller. Thereby it is ensured that the valve is controlled according to accurate flow rate values, regardless of whether the flow rate is within a reliable or an unreliable range of the flow sensor.

At step 512 it is investigated whether or not a time period of Δt has elapsed since the last calibration. If this is not the case, the process is returned to step 509, and the valve is continued to be controlled using the correction which was obtained during the previous calibration. In the case that step 512 reveals that a time period of Δt has elapsed since the last calibration the process is returned to step 505 in order to initiate a new calibration. Thereby a new correction is obtained, which takes any changes in the operating conditions which may have occurred since the previous calibration into account.

## Claims

1. A method for controlling a fluid flow through a valve (100) arranged in a fluid flow system (400), the valve (100) comprising a valve seat (101) and a valve element (102), the valve element (102) being movable with respect to the valve seat (101), an opening degree of the valve (100) being determined by a relative position between the valve seat (101) and the valve element (102), the fluid flow system (400) further having a flow sensor (103) arranged therein, the method comprising the steps of:
- measuring a flow rate, Q_{M}, by means of the flow sensor (103), the measured flow rate Q_{M} being measured at a corresponding opening degree, ϕ_{M}, of the valve (100);
- comparing the measured flow rate, Q_{M}, and a predetermined flow rate threshold value, Q_{T}, below which the flow sensor (103) operates in an unreliable measurement region;
- in the case that Q_{M}<Q_{T}, performing a calibration of the flow sensor (103);
**characterized in that** the calibration of the flow sensor (103) is performed by performing the steps of:
increasing the opening degree of the valve (100) while measuring the flow rate by means of the flow sensor (103), until the flow rate, Q_{M}, measured by the flow sensor (103), is at least equal to Q_{T},
establishing a relationship between actual flow rate and opening degree of the valve (100), based on the measurements of the flow rate during increase of the opening degree and while the flow rate, Q_{M}, is above Q_{T}, and
determining a correction, C, based on the established relationship;
and **in that** the method further comprises the steps of:
- after the calibration step, setting the opening degree of the valve (100) back to an operational opening degree, ϕ_{A}, the operational opening degree, ϕ_{A}, resulting in a flow rate below the threshold value, Q_{T}, and
- subsequently controlling the opening degree of the valve (100) on the basis of flow rate measurements performed by means of the flow sensor (103), corrected by the correction, while the measured flow rate is below the threshold value, Q_{T}.

2. A method according to claim 1, further comprising the steps of repeating the calibration step when a predefined time interval, Δt, has elapsed since initiation of a previous calibration step, and repeating the calibration step until Q_{M}≥Q_{T}.

3. A method according to any of the preceding claims, wherein the step of increasing the opening degree is performed by increasing the opening degree of the valve (100) a plurality of times, wherein opening degree ϕᵢ₊₁ is larger than opening degree ϕᵢ, and wherein opening degree ϕ₁ corresponds to the flow rate being at least equal to Q_{T}.

4. A method according to any of the preceding claims, wherein the step of establishing a relationship is based on a valve characteristic function, F=f(ϕ, Q), for the valve (100), describing behaviour of the valve (100), where ϕ is the opening degree of the valve and Q is the flow rate measured by the flow sensor (103).

5. A method according to claim 4, wherein the valve characteristic function, F, defines a linear relation between the flow rate, Q, and opening degree ϕ of the valve (100).

6. A method according to any of the preceding claims, wherein the correction, C, is a function of Q_{M}.

7. A method according to any of the claims 1-5, wherein the correction, C, is obtained from a look-up table, and in combination with the measured flow rate and the corresponding opening degree of the valve (100).

8. A method according to any of the preceding claims, further comprising the step of controlling the opening degree of the valve (100) on the basis of flow rate measurements performed by means of the flow sensor (103) in the case that the comparing step reveals that Q_{M}≥Q_{T}.

9. A fluid flow system (400) comprising a valve (100) with a valve seat (101) and a valve element (102), a flow sensor (103), and a controller (201), the controller (201) being configured to perform the method according to any of the preceding claims.

10. A fluid flow system (400) according to claim 9, wherein the flow sensor (103) is an integral part of the valve (100).

11. A fluid flow system (400) according to claim 9 or 10, wherein the flow sensor (103) is an exchangeable device.

## Patentansprüche

1. Verfahren zur Steuerung eines Fluidstroms durch ein Ventil (100), das in einem Fluidstromsystem (400) angeordnet ist, wobei das Ventil (100) einen Ventilsitz (101) und ein Ventilelement (102) umfasst, wobei das Ventilelement (102) in Bezug auf den Ventilsitz (101) beweglich ist, wobei ein Öffnungsgrad des Ventils (100) durch eine relative Position zwischen dem Ventilsitz (101) und dem Ventilelement (102) bestimmt wird, wobei das Fluidstromsystem (400) ferner einen darin angeordneten Strömungssensor (103) aufweist, wobei das Verfahren die folgenden Schritte umfasst:
- Messen einer Durchflussgeschwindigkeit Q_{M} mittels des Strömungssensors (103), wobei die gemessene Durchflussgeschwindigkeit Q_{M} bei einem entsprechenden Öffnungsgrad ϕ_{M} des Ventils (100) gemessen wird;
- Vergleichen der gemessenen Durchflussgeschwindigkeit Q_{M} und eines vorgegebenen Schwellenwerts Q_{T} der Durchflussgeschwindigkeit, unterhalb dessen der Strömungssensor (103) in einem unzuverlässigen Messbereich arbeitet;
- Durchführen einer Kalibrierung des Strömungssensors (103) in dem Fall, dass Q_{M} < Q_{T} ist;
**dadurch gekennzeichnet, dass** die Kalibrierung des Strömungssensors (103) durch die Durchführung der folgenden Schritte durchgeführt wird:
Erhöhen des Öffnungsgrads des Ventils (100) während des Messens der Durchflussgeschwindigkeit mittels des Strömungssensors (103) so lange, bis die Durchflussgeschwindigkeit Q_{M}, die von dem Strömungssensors (103) gemessen wird, mindestens gleich Q_{T} ist,
Aufbauen einer Beziehung zwischen der tatsächlichen Durchflussgeschwindigkeit und dem Öffnungsgrad des Ventils (100) auf der Grundlage der Messungen der Durchflussgeschwindigkeit während der Erhöhung des Öffnungsgrads und während die Durchflussgeschwindigkeit Q_{M} oberhalb von Q_{T} liegt, und
Bestimmen einer Korrektur C auf der Grundlage der aufgebauten Beziehung;
und **dadurch gekennzeichnet, dass** das Verfahren die folgenden Schritte umfasst:
- nach dem Kalibrierungsschritt Zurücksetzen des Öffnungsgrads des Ventils (100) auf einen Betriebsöffnungsgrad ϕ_{A}, wobei der Betriebsöffnungsgrad ϕ_{A} zu einer Durchflussgeschwindigkeit unterhalb des Schwellenwerts Q_{T} führt, und
- ein anschließendes Steuern des Öffnungsgrads des Ventils (100) auf der Grundlage der Messungen der Durchflussgeschwindigkeit, die mittels des Strömungssensors (103) durchgeführt werden, dabei korrigiert durch die Korrektur, während die gemessene Durchflussgeschwindigkeit unterhalb des Schwellenwerts Q_{T} liegt.

2. Verfahren nach Anspruch 1, das ferner die Schritte des Wiederholens des Kalibrierungsschritts umfasst, wenn ein vordefiniertes Zeitintervall, Δt, seit der Initiierung eines vorhergehenden Kalibrierungsschritts verstrichen ist, und Wiederholen des Kalibrierungsschritts so lange, bis Q_{M} ≥ Q_{T} ist.

3. Verfahren nach einem der vorhergehenden Ansprüche, wobei der Schritt des Erhöhens des Öffnungsgrads durchgeführt wird, indem der Öffnungsgrad des Ventils (100) mehrere Male erhöht wird, wobei der Öffnungsgrad ϕᵢ₊₁ größer als der Öffnungsgrad ϕᵢ ist, und wobei der Öffnungsgrad ϕ₁ der Durchflussgeschwindigkeit entspricht, die mindestens gleich Q_{T} ist.

4. Verfahren nach einem der vorhergehenden Ansprüche, wobei der Schritt des Aufbauens einer Beziehung auf der Grundlage einer charakteristischen Ventilfunktion, F = f(cp, Q), für das Ventil (100) beruht, die das Verhalten des Ventils (100) beschreibt, wobei ϕ der Öffnungsgrad des Ventils und Q die Durchflussgeschwindigkeit ist, die von dem Strömungssensor (103) gemessen wird.

5. Verfahren nach Anspruch 4, wobei die charakteristische Ventilfunktion F eine lineare Beziehung zwischen der Durchflussgeschwindigkeit Q und dem Öffnungsgrad ϕ des Ventils (100) ist.

6. Verfahren nach einem der vorhergehenden Ansprüche, wobei die Korrektur C eine Funktion von Q_{M} ist.

7. Verfahren nach einem der Ansprüche 1 bis 5, wobei die Korrektur C aus einer Nachschlagetabelle und in Kombination mit der gemessenen Durchflussgeschwindigkeit und dem Öffnungsgrad des Ventils (100) erhalten wird.

8. Verfahren nach einem der vorhergehenden Ansprüche, das ferner den Schritt umfasst, auf der Grundlage der Messungen der Durchflussgeschwindigkeit, die mittels des Strömungssensors (103) durchgeführt werden, den Öffnungsgrad des Ventils (100) zu steuern in dem Fall, dass der Schritt des Vergleichens aufdeckt, dass Q_{M} ≥ Q_{T} ist.

9. Fluidstromsystem (400), das ein Ventil (100) mit einem Ventilsitz (101) und einem Ventilelement (102), einen Strömungssensor (103) und eine Steuereinheit (201) umfasst, wobei die Steuereinheit (201) konfiguriert ist, um das Verfahren nach einem der vorhergehenden Ansprüche durchzuführen.

10. Fluidstromsystem (400) nach Anspruch 9, wobei der Strömungssensor (103) ein integraler Teil des Ventils (100) ist.

11. Fluidstromsystem (400) nach Anspruch 9 oder 10, wobei der Strömungssensor (103) eine austauschbare Vorrichtung ist.

## Revendications

1. Procédé de régulation d'un écoulement de fluide à travers une soupape (100) disposée dans un système d'écoulement de fluide (400), la soupape (100) comprenant un siège de soupape (101) et un élément soupape (102), l'élément soupape (102) étant mobile par rapport au siège de soupape (101), un degré d'ouverture de la soupape (100) étant déterminé par une position relative entre le siège de soupape (101) et l'élément soupape (102), le système d'écoulement de fluide (400) comportant en outre un capteur d'écoulement (103) disposé dedans, le procédé comprenant les étapes suivantes :
- mesure d'un débit Q_{M} au moyen du capteur d'écoulement (103), le débit mesuré Q_{M} étant mesuré à un degré d'ouverture correspondant ϕ_{M} de la soupape (100) ;
- comparaison du débit mesuré Q_{M} et d'une valeur seuil de débit prédéterminée Q_{T} en dessous de laquelle le capteur d'écoulement (103) fonctionne dans une zone de mesure non fiable ;
- dans le cas où Q_{M} < Q_{T}, réalisation d'un étalonnage du capteur d'écoulement (103) ;
**caractérisé en ce que** l'étalonnage du capteur d'écoulement (103) est effectué en réalisant les étapes suivantes :
augmentation du degré d'ouverture de la soupape (100) tout en mesurant le débit au moyen du capteur d'écoulement (103) jusqu'à ce que le débit Q_{M} mesuré par le capteur d'écoulement (103) soit au moins égal à Q_{T},
établissement d'une relation entre le débit réel et le degré d'ouverture de la soupape (100) en se basant sur les mesures du débit pendant l'augmentation du degré d'ouverture et pendant que le débit Q_{M} est supérieur à Q_{T}, et
détermination d'une correction C en se basant sur la relation établie,
et **en ce que** le procédé comprend en outre les étapes suivantes :
- après l'étape d'étalonnage, remise du degré d'ouverture de la soupape (100) à un degré d'ouverture fonctionnel ϕ_{A}, le degré d'ouverture fonctionnel ϕ_{A} résultant en un débit inférieur à la valeur seuil Q_{T}, et
- ensuite régulation du degré d'ouverture de la soupape (100) sur la base de mesures de débit réalisées au moyen du capteur d'écoulement (103), corrigées de la correction pendant que le débit mesuré est en-dessous de la valeur seuil Q_{T}.

2. Procédé selon la revendication 1, comprenant en outre les étapes de répétition de l'étape d'étalonnage lorsqu'un laps de temps prédéfini Δt s'est écoulé depuis l'initiation d'une étape d'étalonnage précédente, et répétition de l'étape d'étalonnage jusqu'à ce que Q_{M} ≥ Q_{T}.

3. Procédé selon l'une quelconque des revendications précédentes, dans lequel l'étape d'augmentation du degré d'ouverture est réalisée en augmentant le degré d'ouverture de la soupape (100) une pluralité de fois, le degré d'ouverture ϕᵢ₊₁ étant supérieur au degré d'ouverture ϕᵢ et le degré d'ouverture ϕᵢ correspondant au débit qui est au moins égal à Q_{T}.

4. Procédé selon l'une quelconque des revendications précédentes, dans lequel l'étape d'établissement d'une relation est basée sur une fonction caractéristique de soupape F = f(ϕ, Q) pour la soupape (100), décrivant le comportement de la soupape (100), ϕ étant le degré d'ouverture de la soupape et Q étant le débit mesuré par le capteur d'écoulement (103).

5. Procédé selon la revendication 4, dans lequel la fonction caractéristique de soupape F définit une relation linéaire entre le débit Q et le degré d'ouverture ϕ de la soupape (100).

6. Procédé selon l'une quelconque des revendications précédentes, dans lequel la correction C est fonction de Q_{M}.

7. Procédé selon l'une quelconque des revendications 1 à 5, dans lequel la correction C est obtenue à partir d'un tableau de recherche, et en combinaison avec le débit mesuré et le degré d'ouverture correspondant de la soupape (100).

8. Procédé selon l'une quelconque des revendications précédentes, comprenant en outre l'étape de commande du degré d'ouverture de la soupape (100) sur la base de mesures de débit réalisées au moyen du capteur d'écoulement (103) dans le cas où l'étape de comparaison révèle que Q_{M} ≥ Q_{T}.

9. Système d'écoulement de fluide (400) comprenant une soupape (100) dotée d'un siège de soupape (101) et d'un élément soupape (102), d'un capteur d'écoulement (103) et d'un contrôleur (201), le contrôleur (201) étant conçu pour réaliser le procédé selon l'une quelconque des revendications précédentes.

10. Système d'écoulement de fluide (400) selon la revendication 9, dans lequel le capteur d'écoulement (103) fait partie intégrante de la soupape (100).

11. Système d'écoulement de fluide (400) selon la revendication 9 ou 10, dans lequel le capteur d'écoulement (103) est un dispositif échangeable.
